# EUROPEAN PATENT APPLICATION

(11) **EP 1 403 547 A2**
(43) Date of publication of application: **31.03.2004**
(21) Application number: 03021952.1
(22) Date of filing: 29.09.2003
(51) Int. Cl.: F16D 48/06

(54) **Creep torque control apparatus**

(30) Priority: 30.09.2002 JP 2002284752
(71) Applicant: Aisin Seiki Kabushiki Kaisha, Kariya-shi, Aichi-ken (JP); Aisin Ai Co., Ltd., Nishio-shi, Aichi-ken (JP)
(72) Inventor: Haneda, Yoshitomi, Anjo-shi Aichi-ken (JP); Okada, Nobuyuki, Anjo-shi Aichi-ken (JP); Taguchi, Yoshinori, Anjo-shi Aichi-ken (JP); Shimizu, Masaru, Toyota-shi Aichi-ken (JP); Terakawa, Tomomitsu, Anjo-shi Aichi-ken (JP); Miyazaki, Takeshige, Anjo-shi Aichi-ken (JP)
(74) Representative: Leson, Thomas Johannes Alois, Dipl.-Ing.

(57) **Abstract**

A creep torque control apparatus of a vehicle for outputting a creep torque required to perform a creep running by controlling a load of a clutch disc toward a flywheel rotating as a unit with an output shaft of an engine characterized in that the creep torque control apparatus further includes a detecting means for detecting a vehicle speed, a measuring means for measuring an elapsed time from an output start of the creep torque and a changing means for changing a value of the creep torque based on a relationship between the vehicle speed and the elapsed time.

## Description

### FIELD OF THE INVENTION

This invention generally relates to a creep torque control apparatus.

### BACKGROUND OF THE INVENTION

Generally, a creep force by which a vehicle starts to move slowly without depressing an accelerator pedal is generated in an automatic transmission since the engine driving force is transmitted to driving wheels when a shift lever, a vehicle speed, a depressing amount of an accelerator pedal and the like are under a predetermined condition with the engine operating. Such generation of the creep force is disclosed in Japanese Patent Laid-Open Publication No. H07-77226.

In addition, an automated manual transmission (AMT) is known for automatically performing a series of speed change operations such as engagement/disengagement of a clutch, gear shifting, and gear selection according to a driver's intention or a driving condition of a vehicle through an operation of an actuator connected to a manual transmission.

In the AMT system, a creep control is performed for running the vehicle (creep running) by transmitting a clutch torque (creep torque) intentionally to the driving wheels by pressing a clutch disc toward a flywheel so as to contact therewith when the vehicle is under a predetermined condition. The driver is thus able to drive the vehicle without depressing the accelerator pedal and only required to depress or release a brake pedal.

According to the known AMT system, however, the output creep torque is constantly set at a predetermined level. Thus, if a strong creep torque is required for the creep running in such a state as the vehicle driving on the uphill and the vehicle weight being heavy, the sufficient creep torque cannot be obtained and therefore the required creep running may be impossible when the driver tries to perform the creep running by releasing the brake pedal.

Thus, a need exists for a creep torque control apparatus which can perform a creep running by appropriately changing a value of the creep torque in response to a vehicle driving condition.

### SUMMARY OF THE INVENTION

According to a first aspect of the present invention, a creep torque control apparatus of a vehicle for outputting a creep torque required to perform a creep running by controlling a load of a clutch disc toward a flywheel rotating as a unit with an output shaft of an engine characterized in that the creep torque control apparatus further includes a detecting means for detecting a vehicle speed, a measuring means for measuring an elapsed time from an output start of the creep torque, and a changing means for changing a value of the creep torque based on a relationship between the vehicle speed and the elapsed time.

According to a second aspect of the present invention, a creep torque control apparatus of a vehicle for outputting a creep torque required to perform a creep running by controlling a load of a clutch disc toward a flywheel rotating as a unit with an output shaft of an engine characterized in that the creep torque control apparatus further includes a detecting means for detecting a road slope in a longitudinal direction of a vehicle. A value of the creep torque is changed to a larger value when the detected road slope exceeds a slope threshold value.

According to a third aspect of the present invention, a creep torque control apparatus of a vehicle for outputting a creep torque required to perform a creep running by controlling a load of a clutch disc toward a flywheel rotating as a unit with an output shaft of an engine characterized in that the creep torque control apparatus further includes a detecting means for detecting a vehicle weight. A value of the creep torque is changed to a larger value when the detected vehicle weight exceeds a weight threshold value.

According to a fourth aspect of the present invention, a creep torque control apparatus of a vehicle for outputting a creep torque required to perform a creep running by controlling a load of a clutch disc toward a flywheel rotating as a unit with an output shaft of an engine characterized in that the creep torque control apparatus further includes a detecting means for detecting at least one of a road slope in a longitudinal direction of a vehicle and a vehicle weight. A value of the creep torque is changed to a larger value when the detected road slope exceeds a slope threshold value or the detected vehicle weight exceeds a weight threshold value.

### BRIEF DESCRIPTION OF THE DRAWING FIGURES

The foregoing and additional features and characteristics of the present invention will become more apparent from the following detailed description considered with reference to the accompanying drawing figures in which like reference numerals designate like elements and wherein:
Fig. 1 is a schematic view of a vehicle control system according to a first embodiment of the present invention;
Fig. 2 is a map showing a relationship between a stroke of a rod and a clutch torque according to a first embodiment of the present invention;
Fig. 3 is a flowchart of an overall control;
Fig. 4 is a flowchart of a creep control;
Fig. 5 is a flowchart of a clutch control;
Fig. 6 is a flowchart of an engine control;
Fig. 7 is a flow chart of the creep control according to a second embodiment of the present invention;
Fig. 8 is a flowchart of the creep control according to a third embodiment of the present invention; :
Fig. 9 is a map showing a calculation formula of the creep torque; and
Fig. 10 is a map showing a calculation formula of a maximum creep torque.

### DETAILED DESCRIPTION OF THE INVENTION

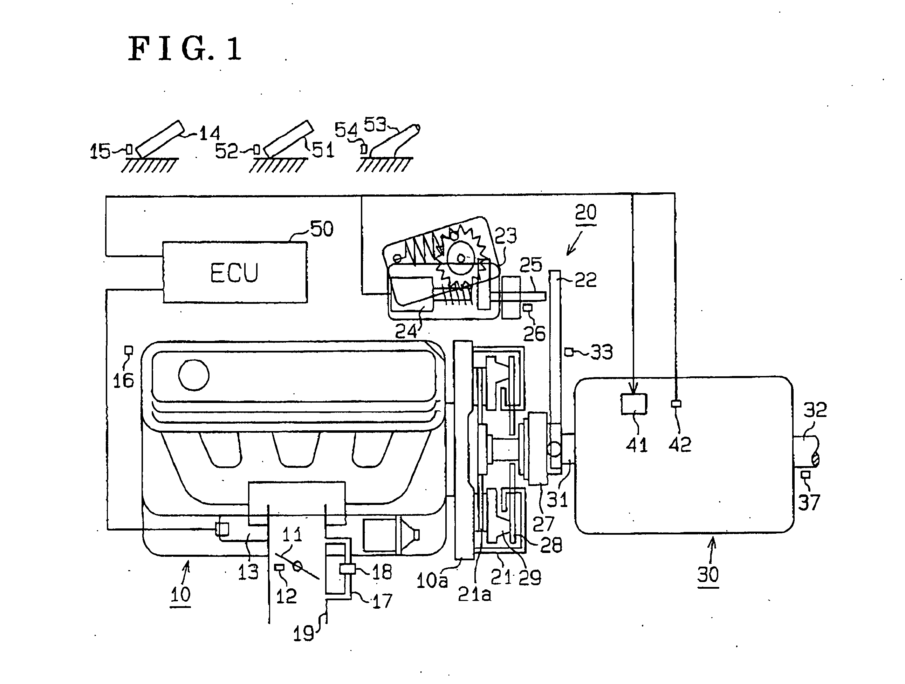

A first embodiment of the present invention is explained referring to Figs. 1 to 10.

Fig. 1 is a schematic view of a vehicle control system for which the present invention is employed. In this vehicle control system, an automatic clutch 20 is attached to a flywheel 10a rotating as a unit with an output shaft of an engine 10 as an internal combustion engine. An automatic transmission 30 is connected to the flywheel 10a via the automatic clutch 20.

The engine 10 includes a throttle valve 11 for adjusting an intake air amount, a throttle sensor 12 for detecting an opening of the throttle valve 11 (throttle opening), and a throttle actuator 13 for opening/closing the throttle valve 11. A bypass passage 17 bypassing the throttle valve 11 and connecting an upstream side and a downstream side of the throttle valve 11 is formed at an intake passage 19, which leads to the engine 10. An idle speed control valve (ISC valve) 18 of a known linear solenoid type is provided at a midpoint of the bypass passage 17.

The ISC valve 18 is actuated for stabilizing an idle speed of the engine 10 when the engine 10 idles with the throttle valve 11 being fully opened. The ISC valve 18 controls the intake air amount by opening/closing the bypass passage 17. That is, the intake air amount flowing in the bypass passage 17 is adjusted by controlling the opening of the ISC valve 18 when the engine 10 idles to thereby adjust the engine speed Ne and the engine output.

An accelerator sensor 15 for detecting an operation amount of an accelerator pedal 14 (accelerator opening) is provided at the accelerator pedal 14 to be depressed by the vehicle driver. The throttle actuator 13 is driven based on the accelerator opening detected by the accelerator sensor 15, thereby obtaining the engine output in response to the accelerator operation by the vehicle driver. Further, an engine speed sensor 16 for detecting the engine speed Ne is provided at the engine 10.

The automatic clutch 20 includes a mechanical (dry type single plate) frictional clutch 21, a clutch lever 22, and a clutch actuator 23 for controlling a transmission level of the frictional clutch 21 via the clutch lever 22.

The frictional clutch 21 includes a clutch disc 21a rotating as a unit with an input shaft 31 of the automatic transmission 30. The frictional clutch 21 changes the transmission level between the clutch disc 21a and the flywheel 10a (hereinafter referred to as "clutch torque Tcl") by the load change of the clutch disc 21a toward the flywheel 10a. The input shaft 31 is driven depending on an amount of the clutch torque Tcl.

The clutch actuator 23 includes a DC electric motor 24 serving as a driving source. The clutch actuator 23 moves the clutch lever 22 by shifting a rod 25 forward, i.e. rightward direction in Fig. 1 or backward, i.e. leftward direction in Fig. 1 due to the driving of the electric motor 24. A release bearing 27 is pushed via the clutch lever 22 by the rod 25 and then a diaphragm spring 28 elastically connected to the release bearing 27 is deformed to thereby generate the load at a pressure plate 29. The clutch actuator 23 changes the load of the clutch disc 21a toward the flywheel 10a via the pressure plate 29 by shifting the clutch lever 22 via the rod 25 for controlling the transmission level of the frictional clutch 21.

Specifically, when the rod 25 is moved forward to thereby shifting the clutch lever 22 in the rightward direction in Fig. 1, the load of the clutch disc 21a toward the flywheel 10a is decreased. On the other hand, when the rod 25 is moved backward to thereby shifting the clutch lever 22 in the leftward direction in Fig. 1, the load of the clutch disc 21a toward the flywheel 10a is increased.

The relationship between the moving position (stroke) of the rod 25 and the transmission level of the frictional clutch 21 is explained in the following. When the rod 25 is moved forward, the load of the clutch disc 21a toward the flywheel 10a becomes finally substantially nil. At this time, the flywheel 10a and the clutch disc 21a are disengaged from each other and no transmission exists therebetween. The stroke of the rod 25 at this time is set at a standby position.

When the rod 25 is moved backward from the standby position, the load of the clutch disc 21a toward the flywheel 10a is increased in response to the moving amount of the rod 25. At this time, the transmission between the flywheel 10a and the clutch disc 21a is performed with a rotational speed difference therebetween (slip amount) in response to the above load. Especially when the rotational speed difference becomes substantially nil due to the increase of the load of the clutch disc 21a toward the flywheel 10a by the backward movement of the rod 25, the flywheel 10a and the clutch disc 21a rotate synchronously each other. The slip amount between the flywheel 10a and the clutch disc 21a can be controlled by controlling the moving amount of the rod 25 by the operation of the clutch actuator 23 within a distance from the standby position to a position at which the flywheel 10a and the clutch disc 21a rotate synchronously.

When the rod 25 is further moved backward from the position where the flywheel 10a and the clutch disc 21a rotate synchronously, the load of the clutch disc 21a toward the flywheel 10a is further increased in response to the moving amount of the rod 25. Then, when the rod 25 becomes separated from the clutch lever 22, the flywheel 10a and the clutch disc 21a rotate synchronously with the excess load applied. At this time, the stroke of the rod 25 is set at a complete engaging position. The flywheel 10a and the clutch disc 21a are controlled to rotate synchronously each other under the frictional clutch 21 in the full engaging state by maintaining the rod 25 in the full engaging position by the clutch actuator 23.

The clutch torque Tcl transmitted to the input shaft 31 is appropriately controlled by controlling the transmission level of the frictional clutch 21 in response to the stroke of the rod 25 by the operation of the clutch actuator 23. A smooth start, an accurate acceleration and the like can be achieved.

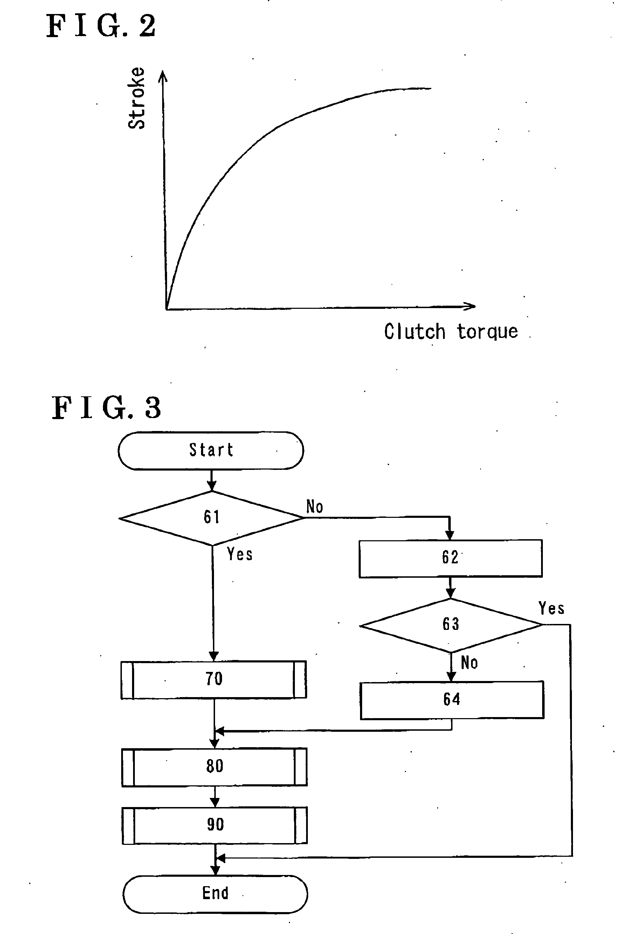

According to the present embodiment, the stroke of the rod 25 and the clutch torque Tcl, which changes in response to the stroke of the rod 25, have a relationship therebetween as shown in Fig. 2. A stroke sensor 26 for detecting the moving position (stroke) of the rod 25 caused by the operation of the clutch actuator 23 is formed at the automatic clutch 20. The transmission level of the frictional clutch 21 is determined based on the stroke of the rod 25 detected by the stroke sensor 26.

The automatic transmission 30 according to the present embodiment includes the input shaft 31 and an output shaft 32. The input shaft 31 is connected to the clutch disc 21a of the frictional clutch 21 in a sate where the power transmission is capable therebetween. The output shaft 32 is connected to an axle (not shown) in a state where the power transmission is capable therebetween. In addition, an input rotation sensor 33 for detecting a rotation speed of the input shaft 31 is provided at the automatic transmission 30. The vehicle speed is evaluated based on the rotation speed of the input shaft 31 and a gear ratio. Further, an output rotation sensor 37 for detecting a rotation speed of the output shaft 32 is provided at the automatic transmission 30.

The automatic transmission 30 also includes a shift actuator 41 for shifting the gears. The gear shifting is appropriately performed by driving the shift actuator 41. Furthermore, the automatic transmission 30 includes a gear sensor 42 for monitoring the gear shifting status to detect that which gear is used for transmitting the driving force of the input shaft 31 to the output shaft 32.

As shown in Fig. 1, a brake sensor 52 for detecting the operation of a brake pedal 51 is provided at the brake pedal 51. In addition, a side brake SW 54 for detecting on/off status of a side brake 53 is provided at the side brake 53.

The vehicle control system in Fig. 1 includes an electronic control unit (ECU) 50 for conducting various controls. The ECU 50 mainly constitutes a known microcomputer (CPU) and also includes ROM storing various programs, maps and the like, RAM reading/writing various data, EEPROM storing data without backup power, and the like. The ECU 50 is connected to various sensors such as the throttle sensor 12, the accelerator sensor 15, the engine speed sensor 16, the stroke sensor 26, rotation sensors 33 and 37, the gear sensor 42, the brake sensor 52, and the side brake SW 54. In addition, the ECU 50 is connected to the throttle actuator 13, the ISC valve 18, the clutch actuator 23, and the shift actuator 41.

The ECU 50 reads a detection signal from the various sensors for detecting the vehicle driving state such as the throttle opening, the accelerator opening, the engine speed, the transmission state of the frictional clutch 21, the input shaft rotation speed, the vehicle speed, the shift position, the brake pedal depressing amount, and the side brake operation. The ECU 50 then performs the opening/closing operation of the throttle actuator 13, the clutch actuator 23, and the shift actuator 41 based on the above vehicle driving state.

Specifically, the ECU 50 obtains the operation amount of the accelerator pedal 14 (accelerator opening) from the detection value by the accelerator sensor 15 and then drives the throttle actuator 13 based on that obtained accelerator opening. The intake air amount to the engine 10 is therefore adjusted whereby the engine output in response to the accelerator operation performed by the driver can be obtained.

When the detection signal from the various sensors satisfies a predetermined condition to be mentioned later, the ECU 50 performs a creep running whereby the vehicle runs without the accelerator pedal 14 being depressed through the transmission of the output generated upon the idling of the engine 10 to the vehicle driving wheels. In this case, the ECU 50 adjusts the opening of the ISC valve 18 appropriately so that the engine 10 outputs required idle rotations. The clutch torque Tcl transmitted to the clutch disc 21a under the engine 10 idling is to be indicated as a creep torque (Tcr). The creep running is conducted by setting the creep torque Tcr, and the like.

The ECU 50 also adjusts the transmission level of the frictional clutch 21 by driving the clutch actuator 23. The transmission level of the frictional clutch 21 is then automatically controlled in response to the vehicle driving condition, thereby controlling the clutch torque Tcl.

Further, the ECU 50 selects the gear through which the power can be transmitted in the automatic transmission. The shifting of the gears is thus automatically controlled in the automatic transmission 30 in response to the vehicle driving condition.

Fig. 3 is a flowchart showing an overall control when the vehicle starts running. A process of this control is performed repeatedly at predetermined intervals by interruption. First in Step 61, the ECU 50 determines whether or not all conditions are satisfied for generating the creep torque Tcr. Specifically, the ECU 50 determines whether or not the shift position is in any one of the first gear, the second gear and the reverse gear, the vehicle speed is within a predetermined value, each depression amount of the accelerator pedal 14 and the brake pedal 51 is within a predetermined amount, and the side brake 53 is not actuated.

When the above-mentioned conditions are all satisfied, the ECU 50 proceeds to a subroutine of Step 70. In the subroutine of Step 70, the creep torque Tcr is calculated. i.e. a creep control is performed.

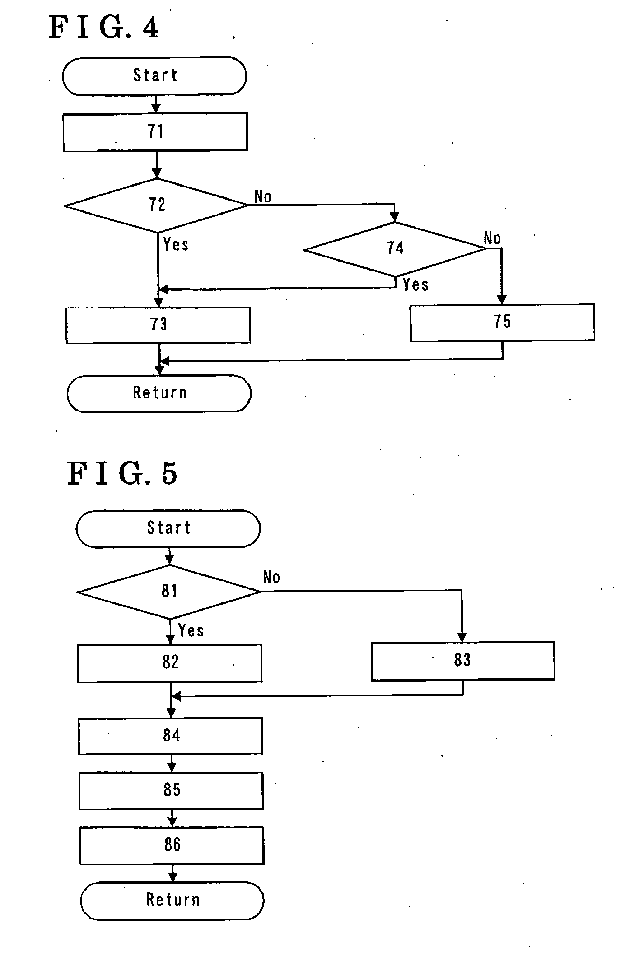

Fig. 4 is a flowchart of the subroutine showing the creep control in Step 70. First, the ECU 50 increments a creep running counter n by 1 and stores that value in the memory of the ECU 50 in Step 71.

Next in Step 72, the ECU 50 determines whether or not the value of the creep running counter n is smaller than a predetermined counter threshold value C1. When the value of the creep running counter n is smaller than the counter threshold value C1, the ECU 50 proceeds to Step 73 to thereby change the creep torque Tcr to a predetermined value T0. Then the ECU 50 returns to a main routine in Fig. 3 and proceeds to a subroutine of Step 80. The value T0 of the creep torque Tcr is defined such that the creep running is appropriately performed under a normal running condition of the vehicle (i.e. on the flat road without overload).

Meanwhile, when the value of the creep running counter n is determined equal to or greater than the counter threshold value C1 in Step 72, the ECU 50 concludes that a predetermined time is elapsed from the output start of the creep torque Tcr and thus the vehicle starts the creep running. Then, the ECU 50 proceeds to Step 74.

In Step 74, the ECU 50 determines whether or not the vehicle speed is greater than a vehicle speed threshold value V1. The vehicle speed threshold value V1 is defined such that the creep running is appropriately performed. When the vehicle speed is greater than the vehicle speed threshold value V1, the ECU 50 proceeds to Step 73 to thereby change the creep torque Tcr to the predetermined value T0. Then, the ECU 50 returns to the main routine in Fig. 3 and proceeds to the subroutine of Step 80. When it is determined that the vehicle speed is equal to or smaller than the vehicle speed threshold value V1 in Step 74, the ECU 50 concludes that the sufficient creep running cannot be achieved by changing the creep torque Tcr to T0. The ECU 50 then proceeds to Step 75.

In Step 75, the ECU 50 changes the creep torque Tcr to a predetermined value T1 and returns to the main routine in Fig. 3 to proceed to the subroutine of Step 80. The value T1 of the creep torque Tcr is defined greater than the value T0.

When any one of the conditions for generating the creep torque Tcr is not satisfied in Step 61, the ECU 50 proceeds to Step 62. In Step 62, the ECU 50 resets the value of the creep running counter n to zero and stores that value in the memory of the ECU 50. Then the ECU 50 proceeds to Step 63.

In Step 63, the ECU 50 determines whether or not the braking force is generated based on the depression amount of the brake pedal 51 and the operation status of the side brake 53. When the ECU 50 determines that the braking force is generated, the stroke of the rod 25 is set at the standby position so that the rotation of the flywheel 10a is not transmitted to the clutch disc 21a. The ECU 50 then terminates the present routine.

Meanwhile, when it is determined that the braking force is not generated in Step 63, the ECU 50 proceeds to Step 64 where a start control is performed for calculating a start torque based on the depression amount of the accelerator pedal 14. The start torque represents a torque required for increasing the vehicle speed in response to the depression amount increase of the accelerator pedal 14. The start torque is thus increased along with the increase of the depression amount of the accelerator pedal 14. The ECU 50 calculates the start torque in Step 64 and then proceeds to the subroutine of Step 80.

When the ECU 50 proceeds to the subroutine of Step 80, the ECU 50 performs a clutch control for controlling the stroke of the rod 25 in response to the creep torque Tcr calculated in the subroutine of Step 70 or the start torque calculated in Step 64.

Fig. 5 is a flowchart of the subroutine showing the clutch control in Step 80. First in Step 81, the ECU 50 determines whether or not the start torque is greater than the creep torque Tcr. At this time, in case that the ECU 50 has performed the creep control in Step 70, the ECU 50 compares the creep torque Tcr calculated in the subroutine of Step 70 and the start torque regarded as zero value. In case that the ECU 50 has performed the start control in Step 64, the ECU 50 compares the start torque calculated in Step 64 and the creep torque Tcr that is obtained by a previous routine. When it is determined that the start torque is greater than the creep torque Tcr, the ECU 50 proceeds to Step 82.

In Step 82, the ECU 50 stores the value of the start torque as a predetermined clutch torque Tcl in the memory. Then the ECU 50 proceeds to Step 84. On the other hand, when it is determined that the creep torque Tcr is equal to or greater than the start torque in Step 81, the ECU 50 proceeds to Step 83.

In step 83, the ECU 50 stores the value of the creep torque Tcr as a predetermined clutch torque Tcl in the memory. Then the ECU 50 proceeds to Step 84. In step 84, the ECU 50 calculates the stroke of the rod 25 required for outputting the necessary clutch torque Tcl based on the map in Fig. 2. The ECU 50 then proceeds to Step 85.

In Step 85, the ECU 50 calculates a current to be supplied to the motor 24 based on the stroke of the rod 25 calculated in Step 84. The ECU 50 then proceeds to Step 86.

In Step 86, the ECU 50 outputs the current calculated in Step 85 to control the stroke of the rod 25 to be set at a required position. Then the ECU 50 returns to the main routine in Fig. 3 to proceed to the subroutine of Step 90.

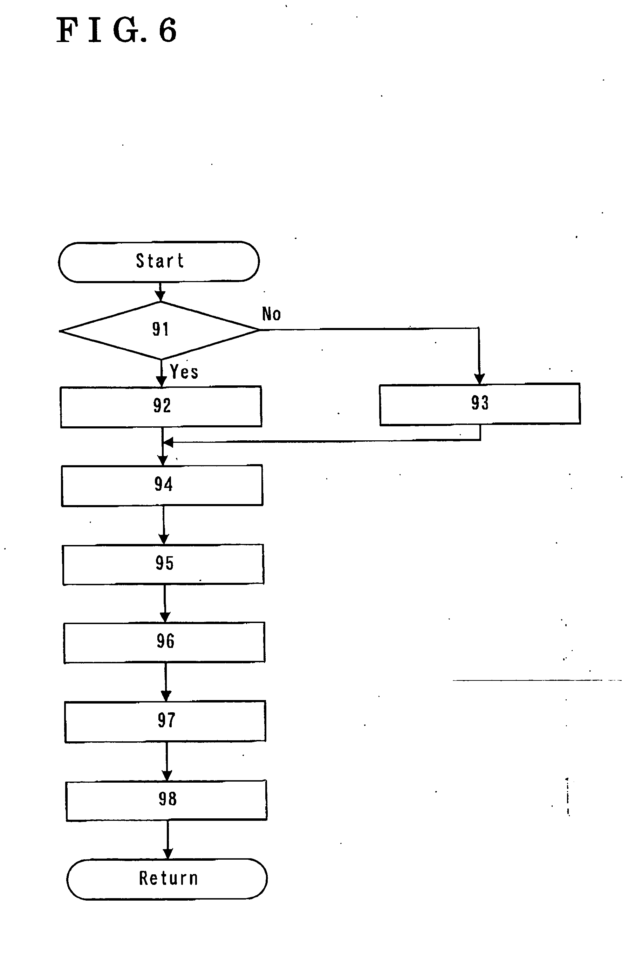

In the subroutine of Step 90, the ECU 50 performs an engine control in response to the creep torque Tcr or the start torque. Fig. 6 is a flowchart of the subroutine showing the engine control in Step 90. First in Step 91, the ECU 50 determines whether or not the creep torque Tcr is greater than a predetermined creep torque threshold value Tcr1. When it is determined that the creep torque Tcr is greater than the creep torque threshold value Tcr1, the ECU 50 proceeds to Step 92.

In Step 92, the ECU 50 concludes that the idle speed is not sufficient and then sets an increase amount of the idle speed at a predetermined value N1. Then the ECU 50 proceeds to Step 94.

When the ECU 50 determines that the creep torque Tcr is equal to or smaller than the creep torque threshold value Tcr1, the ECU 50 proceeds to Step 93.

In Step 93, the ECU 50 concludes that the idle speed is not required to be increased and therefore sets zero value for the increase amount of the idle speed. Then the ECU 50 proceeds to Step 94.

In Step 94, the ECU 50 calculates a target idle speed by adding the increase amount of the idle speed set in Step 92 or 93 to a predetermined standard idle speed. The ECU 50 then proceeds to Step 95.

In Step 95, the ECU 50 calculates the opening of the ISC valve 18 required for achieving the target idle speed calculated in Step 94 and then proceeds to Step 96.

In Step 96, the ECU 50 calculates a total intake air amount to the engine 10, (throttle opening) based on the depression amount of the accelerator pedal 14 and the opening of the ISC valve 18 calculated in Step 95, and then proceeds to Step 97.

In Step 97, the ECU 50 calculates a current required for obtaining the necessary throttle opening calculated in Step 96, i.e. each current for controlling the opening of the ISC valve 18 and for driving the throttle actuator 13 for opening/closing the throttle valve 11. The ECU 50 then proceeds to Step 98.

In Step 98, the ECU 50 outputs each current calculated in Step 97 to the ISC valve 18 and the throttle actuator 13. Then, the ECU 50 returns to the main routine in Fig. 3 and terminates the present routine.

According to the first embodiment of the present invention, the ECU 50 determines whether or not the predetermined time is elapsed from the output start of the creep torque Tcr by comparing the value of the creep running counter n with the counter threshold value C1. In addition, the ECU 50 determines whether or not the vehicle speed reaches the predetermined speed by comparing the vehicle speed with the vehicle speed threshold value V1. When the vehicle speed does not reach the predetermined speed even when the predetermined time is already elapsed from the output start of the creep torque Tcr, the ECU 50 changes the value of the creep torque Tcr from T0 to T1, which is greater than T0. Therefore, the creep torque Tcr is increased in case that the vehicle speed does not reach the predetermined speed when the predetermined time is already elapsed, thereby enabling the creep running in a state where a larger creep torque Tcr is required for the creep running, i.e. in case of the driving on the uphill or the driving with overload.

A second embodiment of the present invention is explained referring to Figs. 3 to 7.

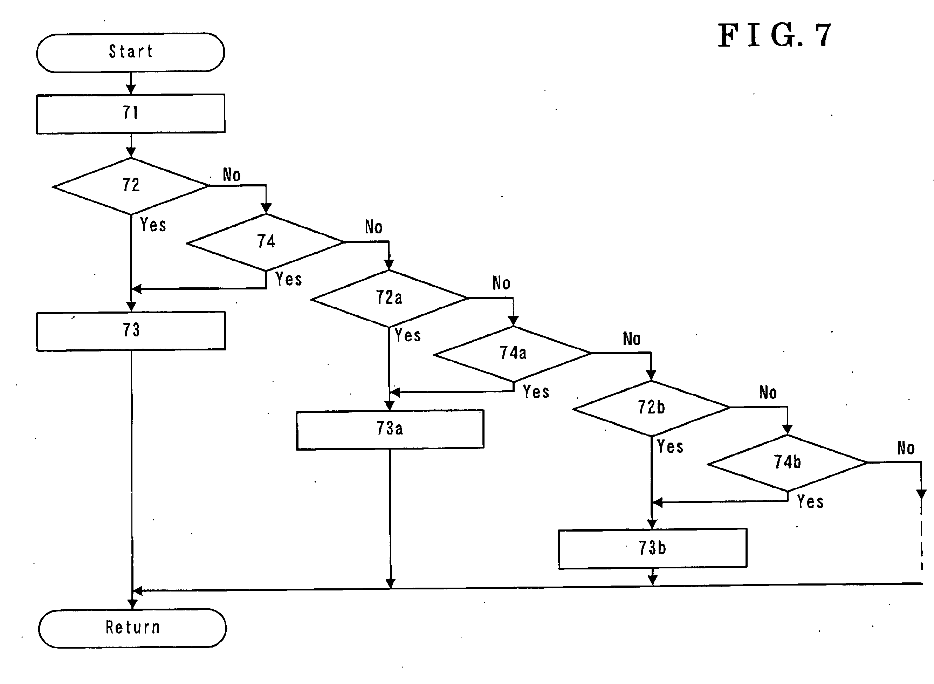

Fig. 7 is a flowchart of the creep control according to the second embodiment. In the second embodiment, only the creep control in Step 70 according to the first embodiment is modified. The structure and the other process of the second embodiment are same as those of the first embodiment and thus the explanation for Steps 71 to 73 is omitted.

When the ECU 50 proceeds to Step 74, the ECU 50 determines whether or not the vehicle speed is greater than the vehicle speed threshold value V1. When the vehicle speed is greater than the vehicle speed threshold value V1, the ECU 50 proceeds to Step 73 to thereby change the creep torque Tcr to the predetermined value T0. Then the ECU 50 returns to the main routine in Fig. 3 and proceeds to the subroutine of Step 80.

Meanwhile, when the ECU 50 determines that the vehicle speed is equal to or smaller than the vehicle speed threshold value V1 in Step 74, the ECU 50 proceeds to Step 72a. In Step 72a, the ECU 50 determines whether or not the value of the creep running counter n is smaller than a counter threshold value C2 (which is larger than C1). When the value of the creep running counter n is smaller than the counter threshold value C2, the ECU 50 proceeds to Step 73a to thereby change the creep torque Tcr to the predetermined value T1. The ECU 50 then returns to the main routine in Fig. 3 and proceeds to the subroutine of Step 80.

When the ECU 50 determines that the value of the creep running counter n is equal to or greater than the counter threshold value C2 in Step 72a, the ECU 50 concludes that a longer time than the predetermined time in Step 72 is elapsed after the creep running start. The ECU 50 then proceeds to Step 74a.

In Step 74a, the ECU 50 determines whether or not the vehicle speed is greater than a vehicle speed threshold value V2 (which is smaller than V1). When the vehicle speed is greater than the vehicle speed threshold value V2, the ECU 50 proceeds to Step 73a to thereby change the creep torque Tcr to the predetermined value T1 (which is greater than T0). The ECU 50 returns to the main routine in Fig. 3 to proceed to the subroutine of Step 80.

Meanwhile, when the ECU 50 determines that the vehicle speed is equal to or smaller than the vehicle speed threshold value V2 in 74a, the ECU 50 proceeds to Step 72b. In the same way as the above-mentioned manner, the ECU 50 monitors a passage of time by comparing the value of the creep running counter n with a counter threshold value C3 (which is greater than C2) in Step 72b and a vehicle speed change by comparing the vehicle speed with a vehicle threshold value V3 (which is smaller than V2) in Step 74b. When the ECU 50 determines that the vehicle speed is not increased along with the passage of time, the ECU 50 changes the creep torque Tcr to a higher value T2 (which is greater than T1). The ECU 50 then returns to the main routine in Fig. 3 to proceed to the subroutine of Step 80 in the same way as the first embodiment.

According to the second embodiment as mentioned above, the creep torque Tcr can be changed at multiple steps by setting the multiple counter threshold values and the vehicle speed threshold values for determining the vehicle condition. Thus, the creep torque Tcr can be more precisely adjusted.

Next, a third embodiment of the present invention is explained referring to Figs. 3, 8 to 10.

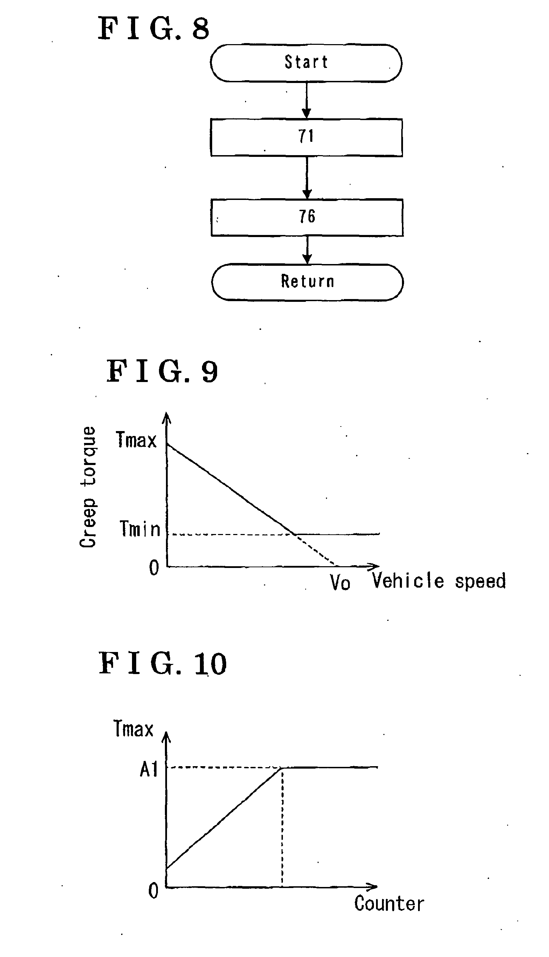

Fig. 8 is a flowchart of the subroutine showing the creep control according to the third embodiment. In the third embodiment, the creep control in Step 70 according to the first embodiment is only modified. The structure and the other process of the third embodiment are same as those of the first embodiment and thus the explanation is omitted.

When the ECU 50 proceeds to the subroutine of Step 70, the ECU 50 increments the creep running counter n by 1 and stores that value in the memory of the ECU 50 in Step 71.

Next, the ECU 50 proceeds to Step 76 where the creep torque Tcr is calculated. Fig. 9 explains the calculation of the creep torque Tcr conducted in the ECU 50 expediently using a map. The horizontal axis in Fig. 9 indicates the vehicle speed while the vertical axis indicates the creep torque Tcr. The ECU 50 actually calculates a maximum creep torque Tmax not by the map in Fig. 9 but by a predetermined calculation formula represented by the map.

A value Tmin in Fig. 9 indicates the creep torque Tcr that is generated when the engine 10 outputs predetermined standard idle rotations. The value of the creep torque Tcr is consistently equal to or greater than the value Tmin accordingly.

In addition, a vehicle speed Vo is provided on the horizontal axis of the map as a standard for determining the appropriate creep running. The vehicle speed Vo and the maximum creep torque Tmax obtained in a manner to be explained later are connected by a straight line on the map in Fig. 9. Since the value of the creep torque Tcr is consistently equal to or greater than Tmin, the creep torque Tcr is set Tmin in a range where the straight line connecting Tmax and Vo falls under Tmin in Fig. 9.

Fig. 10 is a map representing a calculation formula used for obtaining Tmax of Fig. 9. The horizontal axis of the map indicates the creep running counter n while the vertical axis indicates Tmax of Fig. 9.

In the map, Tmax is increased along with the increase of the creep running counter n. That is, when the vehicle running time due to the output of the creep torque Tcr becomes longer, Tmax becomes greater.

In addition, an upper limit value A1 is set for Tmax. Even if the creep running counter n is further increased after Tmax reaches the upper limit value A1, Tmax is set at the upper limit value A1.

Fig. 10 explains expediently how the ECU 50 calculates the creep torque Tcr based on the calculation formula. The ECU 50 calculates the creep torque Tcr actually not by the map in Fig. 10 but by a predetermined calculation formula represented by the map.

First, the ECU 50 reads the value of the creep running counter n and then calculates the corresponding Tmax thereto from the map in Fig. 10. The ECU 50 then calculates the creep torque Tcr using the map in which Tmax and Vo are connected by the straight line. Specifically, the ECU 50 calculates the creep torque Tcr in response to the vehicle speed at that time shown in the map. Then, the ECU 50 returns to the main routine in Fig. 3 to proceed to the subroutine of Step 80.

According to the third embodiment as shown above, the creep torque Tcr in response to the vehicle speed can be calculated based on the map. Thus, the creep torque Tcr can be changed any time, thereby adjusting the creep torque Tcr more precisely.

In addition, the upper limit value A1 is set for Tmax and thus the maximum value is set for the creep torque Tcr. Thus, heating and abrasion of the clutch disc 21a resulting from too high output of the creep torque Tcr can be reduced.

Further, the creep torque Tcr is changed in response to the vehicle speed based on the map. Thus, the calculation burden of the ECU 50 can be reduced compared to a case where the creep torque Tcr is changed by calculating the vehicle speed and the duration of the creep running at the multiple steps.

Still further, the ECU 50 generates the map for calculating the value of the creep torque Tcr based on a detection value of the vehicle speed and the creep running counter n. Thus, the versatility of the creep torque control apparatus can be increased.

The embodiment of the present invention is not limited to the above mentioned embodiments and can be modified as follows. In the present embodiments, the creep torque Tcr is changed based on the elapsed time from the output start of the creep torque Tcr and the vehicle speed. However, it is only required to change the output of the creep torque Tcr by detecting the necessity of changing the output of the creep torque Tcr. For example, the creep torque Tcr may be changed in response to a road slope detected by a slope sensor or a gyroscope mounted on the vehicle. In case that the detected road slope exceeds a slope threshold value, the larger creep torque is output. Thus, when the vehicle runs on the uphill, the appropriate creep running can be obtained by outputting the larger creep torque.

Alternatively, the creep torque Tcr may be changed in response to the weight of the vehicle detected by the weight sensor mounted on the vehicle or the weight to be estimated. In case that the detected vehicle weight exceeds a weight threshold value, the larger creep torque is output. Thus, when the vehicle weight is heavy due to a great amount of load, the appropriate creep running can be obtained in response to the load amount by outputting the larger creep torque.

Further, alternatively, the vehicle speed is evaluated from the rotation speed of the input shaft 31 and the gear ratio. However, the vehicle speed may be evaluated from the rotation speed of the output shaft 32 and the gear ratio.

According to the aforementioned embodiments, the creep control apparatus of the present invention can perform the creep running by appropriately changing the creep torque depending on the vehicle running condition.

The principles, preferred embodiment and mode of operation of the present invention have been described in the foregoing specification. However, the invention which is intended to be protected is not to be construed as limited to the particular embodiments disclosed. Further, the embodiments described herein are to be regarded as illustrative rather than restrictive. Variations and changes may be made by others, and equivalents employed, without departing from the sprit of the present invention. Accordingly, it is expressly intended that all such variations, changes and equivalents which fall within the spirit and scope of the present invention as defined in the claims, be embraced thereby.

A creep torque control apparatus of a vehicle for outputting a creep torque required to perform a creep running by controlling a load of a clutch disc toward a flywheel rotating as a unit with an output shaft of an engine characterized in that the creep torque control apparatus further includes a detecting means for detecting a vehicle speed, a measuring means for measuring an elapsed time from an output start of the creep torque and a changing means for changing a value of the creep torque based on a relationship between the vehicle speed and the elapsed time.

## Claims

1. A creep torque control apparatus of a vehicle for outputting a creep torque required to perform a creep running by controlling a load of a clutch disc toward a flywheel rotating as a unit with an output shaft of an engine **characterized in that** the creep torque control apparatus further includes
a detecting means for detecting a vehicle speed;
a measuring means for measuring an elapsed time from an output start of the creep torque; and
a changing means for changing a value of the creep torque based on a relationship between the vehicle speed and the elapsed time.

2. A creep torque control apparatus according to claim 1, wherein the changing means includes a vehicle speed threshold value for determining the vehicle speed and an elapsed time threshold value for determining the elapsed time, and changes the value of the creep torque to a larger value in case that the vehicle speed does not exceed the vehicle speed threshold value even when the elapsed time exceeds the elapsed time threshold value.

3. A creep torque control apparatus according to claim 2, wherein the vehicle speed threshold value and the elapsed time threshold value includes a plurality of threshold values respectively.

4. A creep torque control apparatus according to claim 1, wherein the changing means includes a calculation formula for changing the creep
torque based on the relationship between the vehicle speed and the elapsed time, and changes the creep torque based on the calculation formula.

5. A creep torque control apparatus according to claim 4, further comprising an upper limit value calculated by the calculation formula to be set for the creep torque, wherein the measuring means changes the creep torque within the upper limit value.

6. A creep torque control apparatus of a vehicle for outputting a creep torque required to perform a creep running by controlling a load of a clutch disc toward a flywheel rotating as a unit with an output shaft of an engine **characterized in that** the creep torque control apparatus further includes a detecting means for detecting a road slope in a longitudinal direction of a vehicle, wherein a value of the creep torque is changed to a larger value when the detected road slope exceeds a slope threshold value.

7. A creep torque control apparatus of a vehicle for outputting a creep torque required to perform a creep running by controlling a load of a clutch disc toward a flywheel rotating as a unit with an output shaft of an engine **characterized in that** the creep torque control apparatus further includes a detecting means for detecting a vehicle weight, wherein a value of the creep torque is changed to a larger value when the detected vehicle weight exceeds a weight threshold value.

8. A creep torque control apparatus of a vehicle for outputting a creep torque required to perform a creep running by controlling a load of a clutch disc toward a flywheel rotating as a unit with an output shaft of an engine **characterized in that** the creep torque control apparatus further includes a detecting means for detecting at least one of a road slope in a longitudinal direction of a vehicle and a vehicle weight, wherein a value of the creep torque is changed to a larger value when either the detected road slope exceeds a slope threshold value or the detected vehicle weight exceeds a weight threshold value.
